(19)

Europäisches
Patentamt
European
Patent Office
Office européen
des brevets

(11) **EP 3 561 101 A1**

(12) **EUROPEAN PATENT APPLICATION**
published in accordance with Art. 153(4) EPC

(43) Date of publication:
**30.10.2019 Bulletin 2019/44**

(21) Application number: **17882600.4**

(22) Date of filing: **15.12.2017**

(51) Int Cl.:
*C22C 38/02* $^{(2006.01)}$  *B21B 37/74* $^{(2006.01)}$
*B21B 3/02* $^{(2006.01)}$  *C22C 38/04* $^{(2006.01)}$
*C22C 38/06* $^{(2006.01)}$  *C22C 38/00* $^{(2006.01)}$
*C21D 8/02* $^{(2006.01)}$  *C21D 9/46* $^{(2006.01)}$

(86) International application number:
**PCT/KR2017/014821**

(87) International publication number:
**WO 2018/117539 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **20.12.2016 KR 20160174961**

(71) Applicant: **Posco**
**Pohang-si, Gyeongsangbuk-do 37859 (KR)**

(72) Inventor: **NA, Hyun-Taek**
**Gwangyang-si**
**Jeollanam-do 57807 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **HIGH-STRENGTH HOT-ROLLED STEEL PLATE HAVING EXCELLENT WELDABILITY AND DUCTILITY AND METHOD FOR MANUFACTURING SAME**

(57)     The present invention relates to a steel plate suitable as an automobile chassis component and, more particularly, to a high-strength hot-rolled steel plate having excellent weldability and ductility and a method for manufacturing the same.

【FIG.1】

**Description**

[Technical Field]

The present disclosure relates to a steel plate suitable as an automobile chassis component, and more particularly, to a hot-rolled steel plate having excellent weldability and ductility and having high strength, and a method for manufacturing the same.

[Background Art]

The conventional high strength steel, of an automobile chassis component, used for a component having a complex shape, is manufactured using dual phase (DP) steel having a DP structure or transformation induced plasticity (TRIP) steel using TRIP, so as to have excellent elongation.

Particularly, in the case of TRIP steel with ductility improved by distributing a residual austenite phase in a polygonal ferrite or bainite structure to cause transformation induced plasticity at the beginning of the processing of the residual austenite phase, appropriate cooling according to an alloy addition amount is applied so that transformation of the austenite into pearlite does not occur during cooling, retransformation of austenite into bainite is delayed in a subsequent coiling step, so a portion of austenite is transformed into martensite and a remainder is the remaining steel during final cooling. In this case, the residual austenite is transformed into martensite by processing at the beginning, ductility is improved in this process.

However, the conventional TRIP steel has a high C content in order to increase stability and a phase fraction of a residual austenite phase, and thus, weldability may be lowered.

Moreover, the TRIP steel with a tensile strength of 590 MPa or more has uniform elongation of 15% to 18%, thereby having the limitation in forming a component having a complex shape.

Meanwhile, as known techniques for TRIP steel, Patent Document 1 discloses that 0.03% to 0.30% of Mo is added, if necessary, to steel containing 0.06% to 0.22% of C, 0.05% to 1.0% of Si, 0.5% to 2.0% of Mn, and 0.25% to 1.5% of Al, to obtain steel having strength of 50 Kg/mm$^2$ or more and elongation of 35% or more. In addition, in Patent Document 2, it is disclosed that high strength steel having a tensile strength of 80 Kg/mm$^2$ and elongation of 30% is obtained through transformation induced plasticity steel, including 0.15% to 0.30% of C, 1.5% to 2.5% of Si, 1.4% to 1.8% of Mn, 0.02% to 0.1% of Al, 0.0080% to 0.0120% of N, and the balance Fe and inevitable impurities, and a method for manufacturing the same.

However, the above techniques have the disadvantages in that uniform elongation of more than 18% is not secured if tensile strength is 590 MPa or more.

Therefore, it is necessary to develop a steel material capable of securing excellent weldability, in addition to excellent strength and ductility, to be suitably applied to a component having a complex shape, of an automobile chassis component.

(Patent Document 1) Japanese Patent Laid-Open Publication No. 1994-145892
(Patent Document 2) Korean Patent Laid-Open Publication No. 2002-0045212

[Disclosure]

[Technical Problem]

An aspect of the present disclosure may provide a high strength hot-rolled steel plate suitable for use on a component, requiring high uniform elongation during a manufacturing process due to a complex shape, among automobile chassis components, and having excellent weldability, as well as a method for manufacturing the same.

[Technical Solution]

According to an aspect of the present disclosure, a high-strength hot-rolled steel plate having excellent weldability and ductility includes 0.08 wt% to 0.15 wt% of carbon (C), 1.2 wt% to 2.2 wt% of silicon (Si), 0.5 wt% to 1.5 wt% of manganese (Mn), 0.001 wt% to 0.03 wt% of phosphorous (P), 0.001 wt% to 0.01 wt% of sulfur (S), 0.01 wt% to 0.1 wt% of aluminum (Al), 0.001 wt% to 0.01 wt% nitrogen (N), a balance of iron (Fe) and other inevitable impurities, and satisfies the element relationship expressed by Relational Expression 1, and a microstructure includes a ferrite phase to satisfy Relational Expressions 2 and 3, and includes a residual austenite phase in an area fraction of 5% or more and a remainder bainite phase.

[Relational Expression 1]

840[C] + 140[Mn] + 35[Si] + 168[Cr] + 210[Mo] + 60[V]

− 336≤0

Here, each element refers to weight content.

[Relational Expression 2]

$$1 - \frac{f_{a(GS \leq 20)}}{f_a} \leq 0.15$$

Here, $f_{a(GS \leq 20)}$ is a ferrite fraction having a particle diameter of 20 μm or less, and $f_a$ is a total ferrite fraction in a microstructure.

[Relational Expression 3]

$$1 - \frac{f_{a(AR \leq 0.7)}}{f_a} \geq 0.80$$

Here, $f_{a(AR \leq 0.7)}$ is a ferrite fraction having an equiaxed shape with an aspect-ratio of 0.7 or less, and fa is a total ferrite fraction in a microstructure.

According to another aspect of the present disclosure, a method for manufacturing a high-strength hot-rolled steel plate having excellent weldability and ductility includes: reheating a steel slab satisfying the described-above alloy composition and Relational Expression 1; manufacturing a hot-rolled steel plate by hot-rolling the reheated steel slab to a temperature in a range of 850 °C to 1150 °C; primary cooling the hot-rolled steel plate to a temperature range of 600 °C to 700 °C at an average cooling rate of 70 °C/s to 150 °C/s; air cooling after the primary cooling; coiling after secondary cooling at an average cooling rate of 70 °C/s to 150 °C/s to a temperature range of 350 °C to 470 °C after the air cooling; and final cooling at an average cooling rate of 0.1°C/hour to 100°C/hour at 200 °C or less after the coiling.

[Advantageous Effects]

According to an exemplary embodiment in the present disclosure, a hot-rolled steel plate having high strength, securing excellent uniform elongation, and securing weldability, may be provided.

The high strength hot-rolled steel plate according to the present disclosure may be suitably used for an automobile chassis component requiring forming to have a complex shape.

[Description of Drawings]

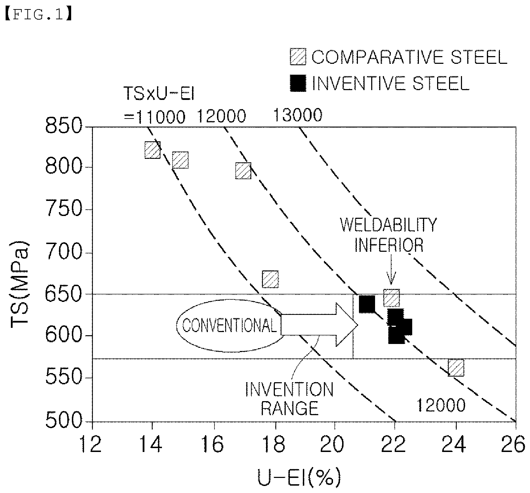

FIG. 1 is a graph illustrating tensile strength (TS) and uniform elongation (U-El) values of Comparative Steels and Inventive Steels, in one embodiment of the present disclosure.

[Best Mode for Invention]

The inventors of the present disclosure confirmed that conventional TRIP steels have a limitation in being applied to a product requiring forming to have a complex shape because the content of carbon (C) is high and the weldability is inferior, and the uniform elongation is about 15% to 18%, and thus have conducted extensive research into a method of providing a steel material having excellent weldability as well as high strength and high ductility.

As a result, it was confirmed that the steel alloy composition, the element relationship, and the manufacturing conditions are optimized to provide a high strength hot-rolled steel plate capable of securing strength, equal to or greater than that of conventional TRIP steel, securing high ductility such as uniform elongation of 20% or more, and having excellent weldability, and the present disclosure has been completed.

Hereinafter, the present disclosure will be explained in detail.

According to one aspect of the present disclosure, a high-strength hot-rolled steel plate having excellent weldability and ductility preferably includes 0.08 wt% to 0.15 wt% of carbon (C), 1.2 wt% to 2.2 wt% of silicon (Si), 0.5 wt% to 1.5 wt% of manganese (Mn), 0.001 wt% to 0.03 wt% of phosphorus (P), 0.001 wt% to 0.01 wt% of sulfur (S), 0.01 wt% to 0.1 wt% of aluminum (Al), and 0.001 wt% to 0.01 wt% of nitrogen (N).

Hereinafter, the reason for the control of the alloy composition of the hot-rolled steel plate provided in the present disclosure as described above will be described in detail. In this case, unless otherwise specified, the content of each component is weight%.

Carbon (C): 0.08% to 0.15%

Carbon (C) is an essential element for securing strength of steel, and is advantageous for securing a residual austenite phase.

If the content of C is less than 0.08%, stability of the residual austenite phase is low and the residual austenite phase could not be formed in a sufficient fraction, and thus the strength and ductility may be significantly reduced. On the other hand, if the content of C exceeds 0.15%, weldability may be deteriorated.

Thus, in the present disclosure, the content of C is preferably controlled to 0.08% to 0.15%. More preferably, C may be included in an amount of 0.10% or more.

Silicon (Si): 1.2% to 2.2%

Silicon (Si) is a ferrite stabilizing element dissolved in ferrite, and has excellent a solid solution strengthening effect. In the case of transformation induced plasticity (TRIP) steel, Si increases a carbon activity (C activity) in ferrite to increase the content of carbon dissolved in austenite, thereby increasing the stability of austenite.

If the content of Si is less than 1.2%, a ferrite phase could not be sufficiently formed, and a carbide inhibiting effect may be reduced. On the other hand, if the content of Si exceeds 2.2%, red scale may be caused and weldability may be lowered.

Thus, in the present disclosure, the content of Si is preferably controlled to 1.2% to 2.2%. More preferably, Si may be included in an amount of 1.5% to 2.0%.

Manganese (Mn): 0.5% to 1.5%

Manganese (Mn) has a strong solid solution strengthening effect in the steel, and is an austenite stabilizing element increasing the quenching properties of steel to facilitate the formation of a low-temperature transformation phase such as acicular ferrite and bainite.

If the content of Mn is less than 0.5%, a desired level of strength may not be secured. On the other hand, if the content of Mn exceeds 1.5%, weldability is deteriorated, and center segregation is caused, resulting in low formability.

Thus, in the present disclosure, the content of Mn is preferably controlled to 0.5% to 1.5%. More preferably, Mn may be included in an amount of 0.8% or more.

Phosphorous (P): 0.001% to 0.03%

Phosphorus (P) is an element having a solid solution strengthening effect and a ferrite transformation promoting effect in a manner similar to Si.

For the effect described above, P is preferably added in an amount of 0.001% or more. In order to control the content of P to be less than 0.001%, manufacturing costs are excessively high, which is economically disadvantageous, and it is difficult to secure strength. However, if the content of P exceeds 0.03%, brittleness caused by grain boundary segregation may occur, fine cracking may easily occur during forming, and the ductility may be deteriorated.

Thus, in the present disclosure, the content of P is preferably controlled to 0.001% to 0.03%.

Sulfur (S): 0.001% to 0.01%

Sulfur (S) is impurities provided in the steel. If the content of S exceeds 0.01%, S is combined with Mn, or the like, to form non-metallic inclusions. Thus, when steel is cut and processed, fine cracking may easily occur, and formability may be significantly deteriorated. However, in order to control the content of S to be less than 0.001%, a lot of time is required for steelmaking, which lowers productivity.

Thus, in the present disclosure, the content of S is preferably controlled to 0.001% to 0.01%.

Aluminum (Al): 0.01% to 0.1%

Aluminum (Al) is an element to be added for deoxidation. To this end, Al is preferably added in an amount of 0.01% or more. However, if the content of Al exceeds 0.1%, Al is combined with nitrogen (N) in the steel to form AlN precipitates. Accordingly, corner cracking in slab may easily occur during continuous casting, and a defect due to formation of inclusions may easily occur.
Thus, in the present disclosure, the content of Al is preferably controlled to 0.01% to 0.1%.

Nitrogen (N): 0.001% to 0.01%

Nitrogen (N) forms a coarse precipitant together with titanium (Ti) or aluminum (Al), as a representative solid solution strengthening element with the C. In general, a solid solution strengthening effect of the N is excellent more than that of the C. However, as an amount of N in steel is increased, toughness of the steel is significantly lowered.
In consideration of this, in the present disclosure, it is preferable to control the content of N to 0.01% or less. However, in order to control the content of N to be less than 0.001%, a lot of time is required for steelmaking, so productivity is lowered, which is preferable.
Thus, in the present disclosure, the content of N is preferably controlled to 0.001% to 0.01%.
The present invention may further include one or more of Cr, Mo, Ti, Nb, and V in order to more advantageously secure the desired material properties of the present disclosure, in addition to the above-described alloy composition.

Chromium (Cr): 0.005% to 0.1%

Chromium (Cr) strengthens solid solution of the steel, and serves to delay transformation of a ferrite phase during cooling to allow the formation of bainite.
For the above-described effect, Cr is preferably included in an amount of 0.005% or more. If the content of Cr exceeds 0.1%, ferrite transformation is excessively delayed to form a martensite phase, so ductility may be lowered. In addition, in a manner similar to Mn, a segregation portion is significantly developed at the center in a thickness of steel, the formability may be lowered.
Thus, in the present disclosure, the content of Cr is preferably controlled to 0.005% to 0.1%.

Molybdenum (Mo): 0.005% to 0.1%

Molybdenum (Mo) is an element facilitating the formation of a bainite phase by increasing the hardenability of the steel.
In order to sufficiently obtain the effect described above, Mo is preferably added in an amount of 0.005% or more. If the content of Mo exceeds 0.1%, quenching properties are excessively increased to form a martensite phase, so formability may be rapidly lowered. In addition, the Mo is a relatively expensive element, so manufacturing costs are increased, which is economically disadvantageous.
Thus, in the present disclosure, the content of Mo is preferably controlled to 0.005% to 0.1%.

Titanium (Ti): 0.001% to 0.05%

Titanium (Ti) is a representative precipitation strengthening element together with niobium (Nb) and vanadium (V), and forms a coarse titanium nitride (TiN) in the steel with strong affinity with N. The TiN precipitates have the effect of inhibiting the growth of crystal grains during a heating process for hot rolling. In addition, Ti, remaining after reacting with N, is dissolved in the steel to be combined with C to form titanium carbide (TiC) precipitates, which is effective for improving the strength of steel.
In order to sufficiently obtain the effect described above, Ti is preferably added in an amount of 0.001% or more. If the content of Ti exceeds 0.05%, coarse TiN precipitates are formed, so the formability may be lowered
Thus, in the present disclosure, the content of Ti is preferably controlled to 0.001% to 0.05%.

Niobium (Nb): 0.001% to 0.05%

As described above, Niobium (Nb) is a representative precipitation strengthening element, and is effective for enhancing the strength and impact toughness of steel due to a grain refinement effect by precipitation and delay of recrystallization during hot rolling.

For the effect described above, Nb is preferably added in an amount of 0.001% or more. If the content of Nb exceeds 0.05%, elongated crystal grains are formed due to excessive delay of recrystallization during hot rolling, and coarse complex precipitates are formed and formability may be lowered.

Thus, in the present disclosure, the content of Nb is preferably controlled to 0.001% to 0.05%.

Vanadium (V): 0.001% to 0.1%

Vanadium (V) is also a representative precipitation strengthening element, and is effective in improving the strength of steel by forming precipitates after coiling.

For the effect described above, V is preferably added in an amount of 0.001% or more. If the content of V exceeds 0.1%, coarse complex precipitates are formed, so the formability may be lowered

Thus, in the present disclosure, the content of V is preferably controlled to 0.001% to 0.1%.

As described above, when an alloy composition is contained, the sum of one or more selected from among the Ti, Nb, V, and Mo, included therein, is preferably 0.15 wt% or less.

The Ti, Nb, V, and Mo are combined with C or N to form precipitates such as carbides, nitrides, and carbonitrides, which may contribute to improvement of strength, and it may have an effect of a grain refinement effect during hot rolling. However, the Ti, Nb, V, and Mo are contained in an excessive amount, the content of C, dissolved in non-transformed austenite, is excessively reduced, so it may be difficult to secure a target uniform elongation.

The remaining elements of the present disclosure are iron (Fe). Merely, in a common manufacturing process, unintended impurities may be inevitably mixed from surroundings, and thus, this may not be excluded. Since these impurities are known to a person having skill in the common manufacturing process, all contents will not be particularly described in the present specification.

Meanwhile, it is preferable that C, Si, Mn, Cr, Mo, and V of the above-described alloy composition satisfy the element relationship represented by Relational Expression 1.

[Relational Expression 1]

$$840[C] + 140[Mn] + 35[Si] + 168[Cr] + 210[Mo] + 60[V] - 336 \leq 0$$

Here, each element refers to weight content.

As the C, Si, Mn, Cr, Mo, and V increase electrical resistance when a steel plate is electrical resistance welded, resistance heating is increased. Accordingly, splashing may occur or a heat affected zone may be softened due to excessive heat input. In addition, during an operation while an input current value is lowered, a cold junction may occur. Moreover, an oxide is formed during welding to lower integrity of a welded zone, so weldability may be lowered.

Thus, in order to secure target weldability in the present disclosure, it is preferable that the element relationship among C, Si, Mn, Cr, Mo, and V satisfies Relational Expression 1.

It is preferable that it is preferable that a microstructure of the hot-rolled steel plate, satisfying the alloy composition and element relationship, described above, includes a ferrite phase, a residual austenite phase, and a bainite phase.

In detail, a hot-rolled steel plate according to the present disclosure includes a ferrite phase to satisfy Relational Expressions 2 and 3, and preferably includes a residual austenite phase in 5% or more and a remainder bainite phase.

In further detail, in order to secure excellent high strength and uniform elongation of the hot-rolled steel plate according to the present disclosure, it is preferably to include a uniform equiaxed ferrite phase satisfying Relational Expressions 2 and 3 as a matrix structure.

Particularly, based on a ferrite transformation behavior stable by satisfying Relational Expression 3, carbon (C) in steel may be sufficiently dissolved in the non-transformed austenite phase. More preferably, as the carbon, dissolved in the non-transformed austenite, remains in an amount of 1.0 wt% or more, a residual austenite phase in a final structure may be secured in an area fraction of 5% or more.

It is preferable that the residual austenite phase is included up to 20%. If the residual austenite phase is excessively formed, a fraction of a bainite phase is relatively lowered, so excellent strength and ductility, a target in the present disclosure, may not be secured simultaneously.

[Relational Expression 2]

$$1 - \frac{f_{a(GS \leq 20)}}{f_a} \leq 0.15$$

Here, $f_{a(GS \leq 20)}$ is a ferrite fraction having a particle diameter of 20 μm or less, and $f_a$ is a total ferrite fraction in a microstructure.

[Relational Expression 3]

$$1 - \frac{f_{a(AR \leq 0.7)}}{f_a} \geq 0.80$$

Here, $f_{a(AR \leq 0.7)}$ is a ferrite fraction having an equiaxed shape with an aspect-ratio of 0.7 or less, and fa is a total ferrite fraction in a microstructure.

Meanwhile, in the present disclosure, it is preferable that the ferrite phase is included in an area fraction of 70% to 80%.

If the ferrite phase fraction is less than 70%, ductility is lowered, so target uniform elongation may not be secured. On the other hand, if the ferrite phase fraction exceeds 80%, a bainite phase fraction is lowered, so target strength may not be secured.

Moreover, in the present disclosure, pearlite may be partially included in the bainite phase, and a martensite phase may be included in a trace amount. In this case, it is preferable that the martensite phase is included in an area fraction of 1.0% or less (including 0%).

As described above, in the hot-rolled steel plate according to the present disclosure, satisfying the steel alloy composition, the element relationship, and the microstructure, tensile strength is 590 MPa or more, uniform elongation is 20% or more, and the product (TS x U-El) of the tensile strength and the uniform elongation is 13500 MPa% or more, so excellent strength and ductility may be secured.

Hereinafter, a method for manufacturing a high-strength hot-rolled steel plate, provided in the present disclosure, another aspect of the present disclosure, will be described in detail.

Briefly, in the present disclosure, a target high strength hot-rolled steel plate may be manufactured through [steel slab reheating - hot rolling - cooling and coiling - final cooling], and conditions for each process will be described in detail below.

[Steel Slab Reheating]

First, a steel slab, satisfying the alloy composition and Relational Equation 1 described above, is prepared, and then it is preferable to reheat the steel slab in a temperature range of 1150°C to 1350°C.

If the reheating temperature is less than 1150°C, precipitates are not sufficiently re-dissolved, so coarse carbonitrides may remain. On the other hand, if the temperature exceeds 1350°C, due to abnormal grain growth of austenite grains, strength is reduced, which is not preferable.

Thus, in the present disclosure, during the reheating of the steel slab, it is preferably performed at 1150 °C to 1350 °C.

[Hot Rolling]

It is preferable that the steel slab, reheated as described above, is hot-rolled to manufacture a hot-rolled steel plate, and it is preferable that finish rolling is performed in a temperature range of 850 °C to 1150 °C during the hot rolling.

If the finish rolling temperature is less than 850 °C, recrystallization delay is excessive, so elongated crystal grains may be developed and the anisotropy may become worse, and formability may be also lowered. On the other hand, if the temperature exceeds 1150 °C, the temperature of the hot-rolled steel plate is increased, so a grain size may be larger and a surface quality of the hot-rolled steel plate may be lowered.

[Cooling and Coiling]

Then, it is preferable that the hot-rolled steel plate is cooled to a coiling temperature to perform the coiling.

In the present disclosure, during cooling to the coiling temperature, it is preferable to perform cooling stage by stage. In detail, it is preferable that primary cooling is performed at an average cooling rate of 70 °C/s to 150 °C/s to a temperature in a range of 600 °C to 700 °C, air cooling is performed, and then secondary cooling is performed at an average cooling rate of 70 °C/s to 150 °C/s to a temperature range of 350 °C to 470 °C, a coiling temperature.

During the primary cooling, if cooling is performed at a temperature, less than 600 °C or greater than 700 °C, to perform air cooling, a ferrite phase is not sufficiently developed, so the ductility of steel may be insufficient. Moreover, if the cooling rate is less than 70 °C/s, a coarse ferrite fraction may be increased. On the other hand, if the cooling rate exceeds 150 °C/s, excessive coolant injection was required, and due to a slow passing rate, a shape of a hot-rolled steel plate may be deteriorated and workability may be lowered.

Accordingly, after the primary cooling is completed, it is preferable to perform air cooling for 3 to 10 seconds. If the air cooling time is less than 3 seconds, a ferrite phase fraction is reduced, so ductility may be lowered. On the other hand, if the air cooling time exceeds 10 seconds, a bainite phase fraction is reduced, so target strength may not be secured.

After the air cooling is completed, secondary cooling is performed to perform coiling. In this case, if a coiling temperature is less than 350 °C, a bainite phase in steel is unnecessarily formed, so the ductility of the steel may be significantly reduced. Moreover, a martensite and austenite (MA) phase is formed, so burring properties at low temperatures may be reduced. On the other hand, if the coiling temperature exceeds 470 °C, a bainite phase is not formed or a phase fraction is significantly low, so target strength may not be secured.

On the other hand, during cooling to the coiling temperature, if a cooling rate is less than 70 °C/s, a low temperature ferrite is additionally formed, so a bainite phase may not be secured in a sufficient fraction. Thus, excellent strength and ductility may not be simultaneously secured. On the other hand, if the cooling rate exceeds 150 °C/s, excessive coolant injection was required, and due to a slow passing rate, a shape of a hot-rolled steel plate may be deteriorated and workability may be lowered.

[Final Cooling]

After the cooling and coiling are completed as described above, a wound coil is preferably cooled at an average cooling rate of 0.1 °C/hour to 100°C/hour at a temperature of 200 °C or less (room temperature to 200 °C).

In this case, if a cooling rate exceeds 100 °C/hour, a MA phase in steel is easily formed, so burring properties in a low temperature region of steel may be reduced. On the other hand, in order to control the cooling rate to be less than 0.1 °C/hour, a separate heating device is required, which is economically disadvantageous and not preferable. More advantageously, cooling may be performed at a cooling rate of 0.5 °C/hour to 25 °C/hour, and more advantageously, at a cooling rate of 1 °C/hour to 10 °C/hour.

Moreover, if the cooling rate exceeds 25 °C/hour, after the coiling is completed, it is preferable to initiate cooling after coil stacking like a sandwich for a predetermined time (for example, several minutes to several tens minutes). In further detail, it is preferable to stack during the time in which a bainite phase is completely transformed to an intended fraction.

In the hot-rolled steel plate, obtained by completing the final cooling, a microstructure includes a ferrite phase formed to satisfy Relational Expressions 2 and 3 as described above, and a residual austenite phase in an area fraction of 5% or more and remainder bainite phase. Thus, not only excellent strength and ductility but also excellent weldability may be secured.

Hereinafter, the present disclosure will be detailed through embodiments. However, these embodiments are provided so that this invention will be more completely understood, and are not intended to limit the scope of the invention. The scope of the invention is determined based on the matters claimed in the appended claims and modifications rationally derived therefrom.

[Mode for Invention]

**(Example)**

A steel slab having an alloy composition illustrated in Table 1 was prepared, and then the steel slab was reheated in a temperature range of 1150 °C to 1350 °C, and then a hot-rolled steel plate was manufactured under hot rolling operation conditions illustrated in Table 2. In this case, after then coiling, final cooling was performed at an average cooling rate of 0.1 °C/hour to 25 °C/hour to 200 °C or less.

A tensile specimen was manufactured with respect to each hot-rolled steel plate to perform a tensile test, a microstructure was observed, and a result thereof is illustrated in Table 3.

The tensile specimen was a test piece collected according to JIS-5 standard based on a direction of 90° with respect to a rolling direction. Moreover, in order measure a phase fraction of a microstructure, a specimen of the corresponding rolled plate was etched with a Nital etchant, and was then observed at 500 magnification using an optical microscope, and then the phase fraction was calculated using an image analyzer.

In addition, welding was performed on each hot-rolled steel plate with welding conditions illustrated in Table 4. In this case, a used welding material was an AWS ER70S-6 1.2 solid wire.

Then, strength of a weld heat affected zone (HAZ) was measured, and then results of checking a fracture location are illustrated in Table 4.

[Table 1]

| Steel | Alloy Composition (wt%) | | | | | | | | | | | | RE 1 |
|---|---|---|---|---|---|---|---|---|---|---|---|---|---|
| | C | Mn | Si | P | S | Al | Ti | Nb | Cr | Mo | N | | |
| CS 1 | 0.08 | 1.0 | 1.8 | 0.013 | 0.002 | 0.02 5 | 0 | 0 | 0 | 0.05 | 0.003 | | -55.3 |
| CS 2 | 0.15 | 1.2 | 1.1 | 0.013 | 0.002 | 0.02 | 0.12 | 0.04 | 0 | 0.01 | 0.004 | | -1.4 |
| CS 3 | 0.12 | 1.45 | 1.4 | 0.023 | 0.003 | 0.02 5 | 0 | 0 | 0 | 0.01 | 0.003 | | 18.9 |
| CS 4 | 0.19 | 1.5 | 0.9 | 0.013 | 0.002 | 0.03 5 | 0.05 | 0 | 0 | 0.02 | 0.005 | | 69.3 |
| CS 5 | 0.16 | 0.9 | 2.3 | 0.015 | 0.002 | 0.02 5 | 0 | 0 | 0 | 0.12 | 0.004 | | 30.1 |
| CS 6 | 0.10 | 1.2 | 2.0 | 0.01 | 0.005 | 0.07 | 0 | 0 | 0 | 0 | 0.004 | | -14 |
| CS 7 | 0.10 | 1.2 | 2.0 | 0.01 | 0.005 | 0.07 | 0 | 0 | 0 | 0 | 0.004 | | -14 |
| IS 1 | 0.10 | 1.2 | 2.0 | 0.01 | 0.005 | 0.07 | 0 | 0 | 0 | 0 | 0.004 | | -14 |
| IS 2 | 0.08 | 1.4 | 1.5 | 0.02 | 0.004 | 0.05 | 0.04 | 0.03 | 0.1 | 0 | 0.003 | | -3.5 |
| IS 3 | 0.11 | 1.2 | 1.5 | 0.01 | 0.002 | 0.04 | 0 | 0 | 0 | 0 | 0.004 | | -23.1 |
| IS 4 | 0.14 | 0.8 | 1.6 | 0.02 | 0.003 | 0.08 | 0.05 | 0 | 0.05 | 0.05 | 0.003 | | -31.5 |
| IS 5 | 0.10 | 1.3 | 1.7 | 0.01 | 0.005 | 0.03 | 0.04 | 0.02 | 0 | 0 | 0.005 | | -10.5 |

In Table 1, Comparative Steels 1, 6, and 7 are the case in which the manufacturing conditions are outside of the present disclosure as described below, and thus indicated by Comparative Steel.
1) CS: Comparative Steel
2) IS: Inventive Steel
3) RE: Relational Expression

[Table 2]

| Steel | Manufacturing Conditions | | | | | | Final Thicknes s (mm) |
|---|---|---|---|---|---|---|---|
| | Finish Rolling Temperatur e (°C) | Primary Cooling | | Air Cooling Time (sec) | Secondary Cooling and Coiling | | |
| | | Cooling Stop Temperat ure (°C) | Cooling Rate (°C/s) | | Cooling Rate (°C/s) | Coiling Tempera ture (°C) | |
| CS 1 | 862 | 637 | 85 | 5 | 81 | 489 | 5 |
| CS 2 | 857 | 643 | 99 | 5 | 101 | 403 | 3.5 |
| CS 3 | 864 | 638 | 102 | 7 | 77 | 418 | 6.5 |
| CS 4 | 881 | 642 | 99 | 8 | 86 | 323 | 6 |
| CS 5 | 875 | 639 | 85 | 6 | 90 | 480 | 5 |
| CS 6 | 852 | 750 | 85 | 6 | 90 | 410 | 5 |
| CS 7 | 852 | 550 | 110 | 6 | 100 | 410 | 5 |

(continued)

| Steel | Manufacturing Conditions | | | | | | | Final Thickness (mm) |
|---|---|---|---|---|---|---|---|---|
| | Finish Rolling Temperatur e (°C) | Primary Cooling | | Air Cooling Time (sec) | Secondary Cooling and Coiling | | | |
| | | Cooling Stop Temperat ure (°C) | Cooling Rate (°C/s) | | Cooling Rate (°C/s) | Coiling Tempera ture (°C) | | |
| IS 1 | 852 | 656 | 99 | 6 | 97 | 410 | | 5 |
| IS 2 | 885 | 658 | 110 | 5 | 89 | 401 | | 6 |
| IS 3 | 880 | 654 | 115 | 6 | 91 | 422 | | 4 |
| IS 4 | 871 | 664 | 90 | 9 | 100 | 431 | | 5.5 |
| IS 5 | 874 | 666 | 90 | 6 | 99 | 381 | | 6 |
| 1) CS: Comparative Steel 2) IS: Inventive Steel | | | | | | | | |

[Table 3]

| Steel | Microstructure (Area Fraction%) | | | | | | Mechanical Properties | | | | |
|---|---|---|---|---|---|---|---|---|---|---|---|
| | F | B+P | M | RA | RE 2 | RE 3 | YS (MPa) | TS (MPa) | T-El (%) | U-El (%) | TS×U-El (MPa%) |
| CS 1 | 70 | 29.8 | 0 | 0.2 | 0.03 | 0.81 | 533 | 564 | 40 | 24 | 13536 |
| CS 2 | 75 | 21.8 | 2 | 1.2 | 0.02 | 0.84 | 537 | 668 | 31 | 18 | 12024 |
| CS 3 | 72 | 24.9 | 0.2 | 2.9 | 0.04 | 0.79 | 516 | 643 | 28 | 22 | 14146 |
| CS 4 | 79 | 10.6 | 4 | 6.4 | 0.04 | 0.82 | 503 | 796 | 24 | 17 | 13532 |
| CS 5 | 79 | 16.4 | 0.1 | 4.5 | 0.03 | 0.83 | 501 | 609 | 30 | 22 | 13398 |
| CS 6 | 60 | 11.0 | 25 | 4.0 | 0.19 | 0. 90 | 645 | 807 | 22 | 15 | 12105 |
| CS 7 | 55 | 14.5 | 27 | 3.5 | 0.01 | 0.55 | 667 | 821 | 21 | 14 | 11494 |
| IS 1 | 75 | 19.7 | 0.1 | 5.2 | 0.02 | 0.81 | 510 | 627 | 34 | 22 | 13794 |
| IS 2 | 78 | 16.8 | 0.2 | 5.0 | 0.04 | 0.81 | 523 | 644 | 35 | 21 | 13524 |
| IS 3 | 79 | 15.8 | 0 | 5.2 | 0.04 | 0.83 | 524 | 611 | 33 | 23 | 14053 |
| IS 4 | 76 | 18.2 | 0 | 5.8 | 0.05 | 0.83 | 461 | 615 | 36 | 22 | 13530 |
| IS 5 | 75 | 18.0 | 0 | 7.0 | 0.03 | 0.81 | 539 | 607 | 36 | 23 | 13961 |

In Table 3, F refers to ferrite, B refers to bainite, P refers to pearlite, M refers to martensite, and RA refers to a residual austenite phase.

In addition, YS refers to 0.2% off-set yield strength, TS refers to tensile strength, T-El refers to total elongation, and U-El refers to uniform elongation.

1) CS: Comparative Steel
2) IS: Inventive Steel
3) RE: Relational Expression

[Table 4]

| Steel | Welding Conditions | | | HAZ Strength (MPa) | Fracture Location |
|---|---|---|---|---|---|
| | Current (A) | Voltage (V) | Rate (m/min) | | |
| CS 1 | 250 | 25 | 0.7 | 502 | ICHAZ |
| CS 2 | 250 | 25 | 0.7 | 568 | ICHAZ |
| CS 3 | 250 | 25 | 0.7 | 508 | CGHAZ |
| CS 4 | 250 | 25 | 0.7 | 549 | CGHAZ |
| CS 5 | 250 | 25 | 0.7 | 432 | CGHAZ |
| CS 6 | 250 | 25 | 0.7 | 702 | ICHAZ |
| CS 7 | 250 | 25 | 0.7 | 714 | ICHAZ |
| IS 1 | 250 | 25 | 0.7 | 545 | ICHAZ |
| IS 2 | 250 | 25 | 0.7 | 547 | ICHAZ |
| IS 3 | 250 | 25 | 0.7 | 544 | ICHAZ |
| IS 4 | 250 | 25 | 0.7 | 547 | ICHAZ |
| IS 5 | 250 | 25 | 0.7 | 528 | ICHAZ |
| In Table 4, ICHAZ refers to the intercritical HAZ region, and CGHAZ refers to the coarse-grain HAZ region.<br>[1]) CS: Comparative Steel<br>[2]) IS: Inventive Steel | | | | | |

As illustrated in Tables 1 to 4, in the case of Inventive Steels 1 to 5, satisfying a steel alloy composition, the element relationship, and manufacturing conditions of the present disclosure, as a microstructure was formed as intended, it is possible to secure tensile strength of 590 MPa or more and uniform elongation of 20% or more. Moreover, it was confirmed that the product of tensile strength and uniform elongation is secured to be 13500 MPa% or more, and it was also confirmed that weldability is excellent considering that strength of a weld heat affected zone is 500 MPa or more and a fracture location is ICHAZ.

On the other hand, in the case of Comparative Steel 1, a steel alloy composition and the element relationship satisfied the present disclosure. However, due to an excessively high coiling temperature, stability of a residual austenite phase was lowered, so a residual austenite phase may not be secured in a sufficient fraction. As a result, pearlite was formed, so the strength in a target level could not be secured.

In the case of Comparative Steel 2, the content of Si of the steel alloy composition was low, and a precipitation strengthening element, Ti, was excessively added, so strength was high while uniform elongation was low.

In the case of Comparative Steel 3, the steel alloy composition satisfied the present disclosure. However, the element relationship (Relational Expression 1), affecting weldability, was outside of the present disclosure, so weldability was lowered. In other words, in the case of Comparative Steel 3, a carbon equivalent index (Ceq) could be expected to exceed 0.4. Thus, HAZ softening was increased and ductility was rather decreased, resulting in fracture in CGHAZ adjacent to a fusion line.

In the case of Comparative Steel 4, C of the steel alloy composition was excessively added, a coiling temperature was low and most of a residual austenite phase was transformed into a martensite phase to significantly increase strength, and a value of Relational Expression 1 exceeds 0 and weldability was lowered.

In the case of Comparative Steel 5, the content of Si was excessive, so the possibility of occurrence of a surface defect such as red scales was significantly high. Moreover, due to the excessively high coiling temperature, it was impossible to secure a stable residual austenite phase. Moreover, a value of Relational Expression 1 exceeded 0, so weldability was lowered.

In the case of Comparative Steels 6 and 7, during primary cooling after the hot rolling, a cooling stop temperature was significantly high or low.

In the case of Comparative Steel 6 therebetween, a coarse ferrite was formed, so a value of Relational Expression 2 exceeded 0.15. In the case of Comparative Steel 7, as a primary cooling stop temperature was in a low temperature range, a value of Relational Expression 3 is less than 0.80. In the steel described above, a martensite phase was excessively formed, so a DP structure was formed rather than a TRIP structure. Thus, the uniform elongation was low.

FIG. 1 is a graph illustrating tensile strength (TS) and uniform elongation (U-El) values of Comparative Steels and Inventive Steels.

**Claims**

1. A high-strength hot-rolled steel plate having excellent weldability and ductility, comprising: 0.08 wt% to 0.15 wt% of carbon (C), 1.2 wt% to 2.2 wt% of silicon (Si), 0.5 wt% to 1.5 wt% of manganese (Mn), 0.001 wt% to 0.03 wt% of phosphorous (P), 0.001 wt% to 0.01 wt% of sulfur (S), 0.01 wt% to 0.1 wt% of aluminum (Al), 0.001 wt% to 0.01 wt% of nitrogen (N), a balance of iron (Fe) and other inevitable impurities, and satisfying the element relationship expressed by Relational Expression 1,
   wherein a microstructure includes a ferrite phase to satisfy Relational Expressions 2 and 3, and includes a residual austenite phase in an area fraction of 5% or more and a remainder bainite phase,

   [Relational Expression 1]

   $$840[C] + 140[Mn] + 35[Si] + 168[Cr] + 210[Mo] + 60[V] - 336 \leq 0$$

   where each element refers to weight content,

   [Relational Expression 2]

   $$1 - \frac{f_{a(GS \leq 20)}}{f_a} \leq 0.15$$

   where $f_{a(GS \leq 20)}$ is a ferrite fraction having a particle diameter of 20 $\mu$m or less, and $f_a$ is a total ferrite fraction in a microstructure,

   [Relational Expression 3]

   $$1 - \frac{f_{a(AR \leq 0.7)}}{f_a} \geq 0.80$$

   where $f_{a(AR \leq 0.7)}$ is a ferrite fraction having an equiaxed shape with an aspect-ratio of 0.7 or less, and fa is a total ferrite fraction in a microstructure.

2. The high-strength hot-rolled steel plate having excellent weldability and ductility of claim 1, wherein the hot-rolled steel plate further comprises one or more selected from among 0.005 wt% to 0.1 wt% of chromium (Cr), 0.005 wt% to 0.1 wt% of molybdenum (Mo), 0.001 wt% to 0.05 wt% of titanium (Ti), 0.001 wt% to 0.05 wt% of niobium (Nb), and 0.001 wt% to 0.1 wt% of vanadium (V), and the sum of one or more selected from among the Ti, Nb, V, and Mo is 0.15 wt% or less.

3. The high-strength hot-rolled steel plate having excellent weldability and ductility of claim 1, wherein the hot-rolled steel plate includes a ferrite phase in an area fraction of 70% to 80%.

4. The high-strength hot-rolled steel plate having excellent weldability and ductility of claim 1, wherein the hot-rolled steel plate has tensile strength of 590 MPa or more and uniform elongation of 20% or more, and the product (TS x U-El) of the tensile strength and the uniform elongation is 13500 MPa% or more.

5. A method for manufacturing a high-strength hot-rolled steel plate having excellent weldability and ductility, comprising:

reheating a steel slab including 0.08 wt% to 0.15 wt% of carbon (C), 1.2 wt% to 2.2 wt% of silicon (Si), 0.5 wt% to 1.5 wt% of manganese (Mn), 0.001 wt% to 0.03 wt% of phosphorous (P), 0.001 wt% to 0.01 wt% of sulfur (S), 0.01 wt% to 0.1 wt% of aluminum (Al), 0.001 wt% to 0.01 wt% of nitrogen (N), a balance of iron (Fe) and other inevitable impurities, and satisfying the element relationship represented by Relational Expression 1;
manufacturing a hot-rolled steel plate by hot-rolling the reheated steel slab in a temperature range of 850°C to 1150°C;
primary cooling the hot-rolled steel plate to a temperature range of 600°C to 700 °C at an average cooling rate of 70 °C/s to 150 °C/s;
air cooling after the primary cooling;
coiling after secondary cooling at an average cooling rate of 70 °C/s to 150 °C/s to a temperature range of 350 °C to 470 °C after the air cooling; and
final cooling at an average cooling rate of 0.1 °C/hour to 100°C/hour at 200 °C or less after the winding,

[Relational Expression 1]

$$840[C] + 140[Mn] + 35[Si] + 168[Cr] + 210[Mo] + 60[V] - 336 \leq 0$$

where each element refers to weight content.

6. The method for manufacturing a high-strength hot-rolled steel plate having excellent weldability and ductility of claim 5, wherein the steel slab further comprises one or more selected from among 0.005 wt% to 0.1 wt% of chromium (Cr), 0.005 wt% to 0.1 wt% of molybdenum (Mo), 0.001 wt% to 0.05 wt% of titanium (Ti), 0.001 wt% to 0.05 wt% of niobium (Nb), and 0.001 wt% to 0.1 wt% of vanadium (V), and the sum of one or more selected from among the Ti, Nb, V, and Mo is 0.15 wt% or less.

7. The method for manufacturing a high-strength hot-rolled steel plate having excellent weldability and ductility of claim 5, wherein the reheating the steel slab is performed in a temperature range of 1150°C to 1350°C.

8. The method for manufacturing a high-strength hot-rolled steel plate having excellent weldability and ductility of claim 5, wherein the air cooling is performed for 3 to 10 seconds.

9. The method for manufacturing a high-strength hot-rolled steel plate having excellent weldability and ductility of claim 5, wherein, after the final cooling, a ferrite phase is formed to satisfy Relational Expressions 2 and 3, and a residual austenite phase in an area fraction of 5% or more and a remainder bainite phase are formed,

[Relational Expression 2]

$$1 - \frac{f_{a(GS \leq 20)}}{f_a} \leq 0.15$$

where $f_{a(GS \leq 20)}$ is a ferrite fraction having a particle diameter of 20 $\mu$m or less, and $f_a$ is a total ferrite fraction in a microstructure,

[Relational Expression 3]

$$1 - \frac{f_{a(AR \leq 0.7)}}{f_a} \geq 0.80$$

where $f_{a(AR \leq 0.7)}$ is a ferrite fraction having an equiaxed shape with an aspect-ratio of 0.7 or less, and fa is a total ferrite fraction in a microstructure.

【FIG.1】

## INTERNATIONAL SEARCH REPORT

| International application No. |
| --- |
| **PCT/KR2017/014821** |

**A. CLASSIFICATION OF SUBJECT MATTER**

*C22C 38/02(2006.01)i, B21B 37/74(2006.01)i, B21B 3/02(2006.01)i, C22C 38/04(2006.01)i, C22C 38/06(2006.01)i, C22C 38/00(2006.01)i, C21D 8/02(2006.01)i, C21D 9/46(2006.01)i*

According to International Patent Classification (IPC) or to both national classification and IPC

**B. FIELDS SEARCHED**

Minimum documentation searched (classification system followed by classification symbols)

C22C 38/02; C21D 9/46; C22C 38/06; C21D 8/02; C22C 38/00; C22C 38/38; B21B 3/00; B21B 37/74; B21B 3/02; C22C 38/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: ferrite phase, surface integral rate, hot rolled steel sheet, bainite phase, austenite phase, hot rolling, weldability

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2015-0051839 A (POSCO) 13 May 2015<br>See paragraphs [0005], [0057]-[0078]; claims 1-8; and figure 1. | 1-9 |
| A | KR 10-2015-0112512 A (HYUNDAI STEEL COMPANY) 07 October 2015<br>See paragraphs [0018]-[0061]; claims 1-6; and figure 3. | 1-9 |
| A | KR 10-2013-0071705 A (POSCO) 01 July 2013<br>See paragraphs [0013]-[0054]; and claims 1-7. | 1-9 |
| A | KR 10-2013-0002208 A (HYUNDAI STEEL COMPANY) 07 January 2013<br>See paragraphs [0017]-[0082]; and figure 1. | 1-9 |
| A | JP 2009-270171 A (SUMITOMO METAL IND., LTD.) 19 November 2009<br>See paragraphs [0025]-[0071]; and claims 1-5. | 1-9 |

| ☐ Further documents are listed in the continuation of Box C. | ☒ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 21 MARCH 2018 (21.03.2018) | **21 MARCH 2018 (21.03.2018)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea<br>Facsimile No. +82-42-481-8578 | Telephone No. |

Form PCT/ISA/210 (second sheet) (January 2015)

**EP 3 561 101 A1**

| INTERNATIONAL SEARCH REPORT<br>Information on patent family members | | International application No.<br><br>**PCT/KR2017/014821** | |
|---|---|---|---|
| Patent document<br>cited in search report | Publication<br>date | Patent family<br>member | Publication<br>date |
| KR 10-2015-0051839 A | 13/05/2015 | KR 10-1543860 B1 | 11/08/2015 |
| KR 10-2015-0112512 A | 07/10/2015 | KR 10-1597418 B1 | 24/02/2016 |
| KR 10-2013-0071705 A | 01/07/2013 | KR 10-1353745 B1 | 22/01/2014 |
| KR 10-2013-0002208 A | 07/01/2013 | KR 10-1290426 B1 | 26/07/2013 |
| JP 2009-270171 A | 19/11/2009 | JP 5200653 B2 | 05/06/2013 |

**EP 3 561 101 A1**

**Patent documents cited in the description**

- JP 6145892 A

- KR 20020045212